# NEUE EUROPÄISCHE PATENTSCHRIFT

(11) **EP 2 344 364 B2**
(45) Veröffentlichungstag und Bekanntmachung des Hinweises auf die Entscheidung über den Einspruch: **08.07.2020**
(45) Hinweis auf die Patenterteilung: 07.09.2016
(21) Anmeldenummer: 09749017.1
(22) Anmeldetag: 04.11.2009
(51) Int. Cl.: B60R 13/10, G06K 19/077, H04B 5/00

(54) **KENNZEICHEN FÜR EIN FAHRZEUG**
LICENSE PLATES FOR A VEHICLE
PLAQUES MINÉRALOGIQUES POUR VÉHICULES

(30) Priorität: 04.11.2008 DE 102008055772; 16.07.2009 DE 102009033559
(43) Veröffentlichungstag der Anmeldung: 20.07.2011
(73) Patentinhaber: Tönnjes ISI Patent Holding GmbH, 27751 Delmenhorst (DE)
(72) Erfinder: BEENKEN, Björn, 27777 Ganderkesee (DE)
(74) Vertreter: Möller, Friedrich
(86) Internationale Anmeldenummer: PCT/EP2009/007902
(87) Internationale Veröffentlichungsnummer: WO 2010/051980

(56) Entgegenhaltungen:
- EP-A1- 1 903 531
- WO-A1-99/19170
- WO-A1-2006/028707
- WO-A1-2006/128448
- WO-A1-2008/079902
- WO-A2-2008/020771
- DE-A1-102006 062 308
- DE-A1-102007 059 168
- DE-U1-202005 018 589
- GB-A- 2 429 828

## Beschreibung

Die Erfindung betrifft ein Kennzeichen für ein Fahrzeug gemäß dem Oberbegriff des Anspruchs 1.

Bei den Kennzeichen gemäß der Erfindung handelt es sich um sogenannte Nummernschilder, die vorn und hinten an der Karosserie oder der Stoßstange eines Fahrzeugs befestigt werden und solche, die auf eine Scheibe des Fahrzeugs geklebt werden, und zwar insbesondere als Zusatzkennzeichen.

Kennzeichen der genannten Art werden häufig gefälscht oder für fremde Fahrzeuge verwendet. Um das zu verhindern sind Kennzeichen bekannt, welche einen berührungslos auslesbaren Datenträger aufweisen. Dieser enthält relevante Daten des Fahrzeuges, zu dem das Kennzeichen gehört. Das Auslesen dieser Daten erfolgt mittels eines externen Lesegerätes. Der Vergleich der ausgelesenen Daten mit dem Fahrzeug, an dem das Kennzeichen verwendet wird, lässt Rückschlüsse auf Manipulationen zu, insbesondere, wenn das Kennzeichen einem fremden Fahrzeug zugeordnet ist.

Bisher bekannte Kennzeichen mit berührungslos auslesbaren Datenträgern weisen eine separate Antenne auf. Diese ist mit elektrischen Leitungen an den Datenträger angeschlossen, um die Übertragung der Daten zu ermöglichen. Ein solches Kennzeichen ist aufwändig und störanfällig.

Aus der gattungsbildenden EP 1 903 531 A1 geht eine Fahrzeugidentifikationseinrichtung hervor, mit einem Kennzeichenkörper und einem RFID Bauteil, die elektrisch miteinander gekoppelt sind. Das RFID Bauteil weist dabei eine eigene Antenne zum Senden auf, wobei der Kennzeichenkörper als Empfangsantenne dient. Der Kennzeichenkörper kann sowohl eine Antenne zum Senden als auch zum Empfangen bilden.

Aus WO 2008/020771 A2 und DE 20 2005 018 589 U1 geht ein Kennzeichen mit einer schlitzförmigen Antenne und einem RFID-Chip hervor.

Aus WO 99/19170 und GB 2 429 828 A geht ein Kennzeichen für Fahrzeuge mit einem elektronischen Datenträger bzw. RFID-Chip zur Identifikation eines Fahrzeuges hervor.

Der Erfindung liegt die Aufgabe zugrunde ein vereinfachtes Kennzeichen mit einem Datenträger und einer Antenne zu schaffen.

Ein Kennzeichen, insbesondere Fahrzeugkennzeichen, zur Lösung dieser Aufgabe weist die Merkmale des Anspruchs 1 auf. Dieses Kennzeichen verfügt über wenigstens einen Datenträger, der ein magnetisches Feld erzeugt und über eine Antenne, die durch den zumindest einen Schlitz aufweisenden Kennzeichenkörper gebildet ist. Der Kennzeichenkörper ist mindestens teilweise aus einem elektrisch leitfähigen Material gebildet, beispielsweise aus Aluminiumblech. Es entsteht so ein Kennzeichen mit einem Transponder aus dem ein magnetisches Feld erzeugenden Datenträger und der Antenne. Der Schlitz im mindestens teilweise leitfähigen Kennzeichenkörper führt zu einer induktiven Einkopplung der Daten des Datenträgers in den als Antenne dienenden Kennzeichenkörper. Der Datenträger ist induktiv an den Schlitz angekoppelt. Der Datenträger weist einen Chip, mindestens eine damit elektrisch leitend verbundene Spule und einen Träger aus einem isolierenden bzw. nichtleitenden Material auf. Die Antenne, insbesondere der Schlitz bzw. der Datenträger, dienen dabei gleichzeitig als Verstärker. Die Daten des Datenträgers sind so ohne zusätzliche Bauteile und auch ohne Anschlüsse des Datenträgers auch aus relativ großer Entfernung aus dem Kennzeichen auslesbar. Außerdem ist der Träger des Datenträgers als Trägerkörper ausgebildet. Der Schlitz weist zur Aufnahme des Trägers mindestens einen Durchbruch auf, wobei der Durchbruch am Ende des Schlitzes aufgeweitet ist.

Nach einer bevorzugten Ausgestaltung der Erfindung ist es vorgesehen, dass der Datenträger elektrisch isoliert innerhalb des Schlitzes angeordnet ist, und zwar vorzugsweise an einem geschlossenen Ende des Schlitzes. Damit ist der Datenträger im Kennzeichenkörper unterbringbar bzw. integrierbar, ohne dass er zusätzlichen Bauraum erfordert und auch von der Außenseite des Kennzeichens nicht wahrnehmbar ist.

Es ist bevorzugt vorgesehen, dass der Datenträger, insbesondere die elektrisch leitenden Komponenten desselben, keinen Kontakt, und zwar insbesondere keinen elektrisch leitenden Kontakt, zum Kennzeichenkörper des Kennzeichens aufweisen. Zwischen den leitenden Komponenten des Datenträgers und dem Schlitz im Kennzeichenkörper ist dazu ein umlaufender Spalt oder Zwischenraum gebildet, wodurch eine besonders wirksame, berührungslose Ankopplung des Datenträgers an den elektrisch leitfähigen Kennzeichenträger des Kennzeichens erfolgt. Diese Ankopplung geschieht induktiv durch das vom Datenträger erzeugte magnetische Feld.

Durch die Anordnung des Datenträgers im Bereich der vom Durchbruch geschaffenen Aufweitung eines Endes des Schlitzes wird ausreichender Raum fürauch größere Datenträger im Kennzeichenkörper geschaffen. Der Datenträger befindet sich dabei innerhalb der Umrisse des Kennzeichenträgers, und zwar ohne hiermit in einen körperlichen bzw. elektrischen Kontakt zu gelangen. Der Datenträger ist im Inneren des Kennzeichens nicht wahrnehmbar, wodurch eine unsichtbare elektrische bzw. elektronische Sicherung des Kennzeichens geschaffen wird.

Es ist bevorzugt vorgesehen, den Datenträger im Kennzeichen, nämlich im Kennzeichenkörper, zu fixieren. Dazu kommt jedes nicht leitende Mittel zur Fixierung des Datenträgers im Kennzeichen in Betracht, wobei dieses Mittel nicht die ganze Fläche des Kennzeichens überdecken muss. Insbesondere geschieht die Fixierung mittels mindestens einer Beschichtung oder Klebeschicht, die den Kennzeichenkörper wenigstens teilweise überdeckt. Die Lesbarkeit der Daten des Datenträgers wird durch die elektrisch nicht leitende Beschichtung oder Klebeschicht nicht beeinträchtigt. Eventuelle Manipulationen am Datenträger würden zu einer leicht wahrnehmbaren Beschädigung der Beschichtung oder Klebeschicht führen. Bei einer alternativen Ausgestaltung der Erfindung wird der Datenträger durch eine auf der sichtbaren Vorderseite des Kennzeichenkörpers aufgebrachte Reflexfolie im Schlitz bzw. Durchbruch fixiert. Hierbei ist die Reflexfolie mindestens im Bereich des Datenträgers, des Schlitzes und/oder des Durchbruchs demetallisiert und dadurch nichtleitend gemacht.

Der Datenträger verfügt über einen passiven Radio-Frequency-Identification-Chip (RFID-Chip), womit die Spule elektrisch leitend verbunden ist. Der Träger erleichtert die Fixierung des Datenträgers im Kennzeichenkörper. Vor allem stellt der aus einem Isolator gebildete Träger sicher, dass der Chip und die Spule des Datenträgers gegenüber dem Kennzeichenkörper isoliert im Kennzeichen integrierbar sind, so dass es zu einer induktiven bzw. magnetischen Ankopplung der Signale des Chips an insbesondere den Kennzeichenkörper des Kennzeichens kommt.

Bevorzugte Ausführungsbeispiele der Erfindung werden nachfolgend anhand der Zeichnung näher erläutert. In dieser zeigen:
- Fig. 1: ein erfindungsgemäßes Kennzeichen mit einem Kennzeichenträger aus Aluminiumblech und einem integrierten Datenträger,
- Fig. 2: einen Querschnitt durch das Kennzeichen der Fig. 1,
- Fig. 3: den Datenträger in einer Draufsicht,
- Fig. 4: ein zweites Ausführungsbeispiel eines Kennzeichens in einer Darstellung gemäß der Fig. 1,
- Fig. 5: ein drittes Ausführungsbeispiel eines Kennzeichens in einer Darstellung gemäß Fig. 1,
- Fig. 6: ein viertes Ausführungsbeispiel eines Kennzeichens in einer Darstellung gemäß Fig. 2, und
- Fig. 7: ein fünftes Ausführungsbeispiel eines Kennzeichens in einer Darstellung gemäß Fig. 2.

Die in den Figuren gezeigten Kennzeichen 10 weisen einen plattenartigen Kennzeichenkörper 11 aus Aluminiumblech auf. Das Kennzeichen 10 ist rechteckig ausgebildet, wobei seine Abmaße denen eines üblichen Fahrzeugkennzeichens entsprechen. Der Kennzeichenkörper 11 ist an seinem Rand 12 mit einem umlaufenden Falz 13 versehen. Dieser Falz 13 wird mittels eines Umformverfahrens, vorzugsweise durch Prägen, in den Kennzeichenkörper 11 eingebracht.

Kennzeichen 10 dieser Art, sogenannte Nummernschilder, werden üblicherweise vorn und hinten am Fahrzeug, und zwar an der Karosserie und/oder der Stoßstange angebracht. Dazu weist das Kennzeichen 10 mehrere Befestigungslöcher 15 auf.

Innerhalb der durch den Falz 13 begrenzten Vorderseite 14 verfügt der Kennzeichenkörper 11 über ein Beschriftungsfeld 22. Auf dem Beschriftungsfeld 22 befindet sich eine Beschriftung 23 des Kennzeichens 10. Die Einbringung der Beschriftung 23 in das Beschriftungsfeld 22 erfolgt vorzugsweise ebenfalls durch Prägen.

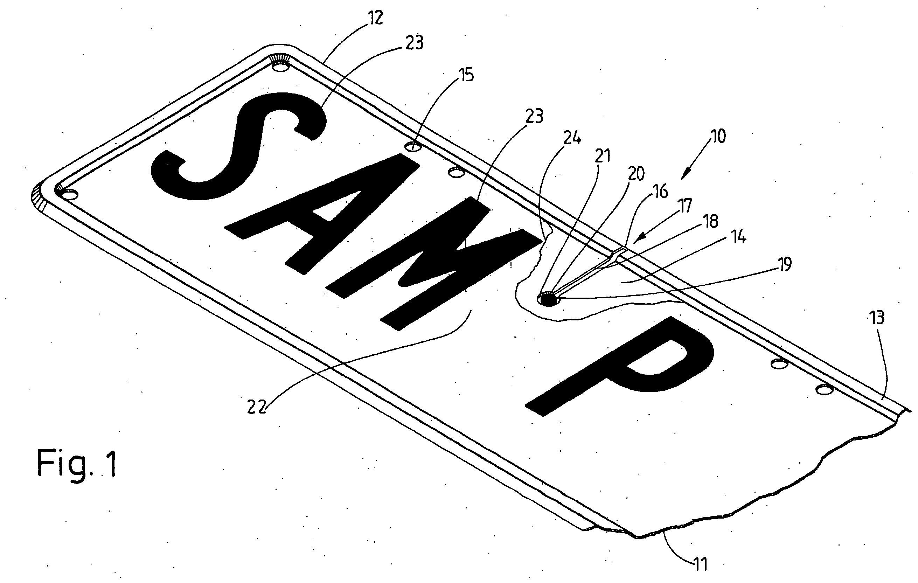

Die Beschriftung kann beliebig sein, ist nämlich nicht auf das in den Fig. 1, 4 und 5 gezeigte Beispiel beschränkt. Es ist insbesondere jede Kombination von Buchstaben, Zahlen und Zeichen möglich, um die Beschriftung 23 zu bilden.

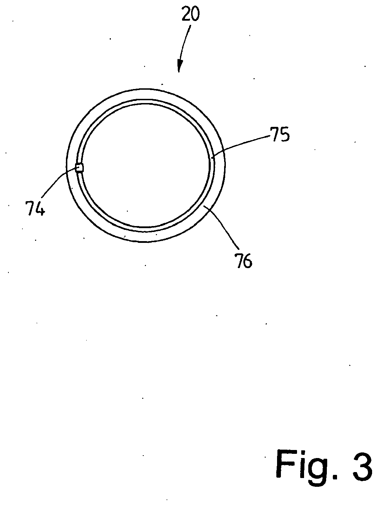

Das Kennzeichen 10 weist einen Transponder auf. Der Transponder verfügt über eine Antenne 17 und einen passiven Datenträger 20. Die gespeicherten Daten des Datenträgers 20 sind über die Antenne 17 berührungslos auslesbar. Der Datenträger 20 verfügt über ausgewählte Daten des Fahrzeugs, zu dem das Kennzeichen 10 gehört. Der Datenträger 20 verfügt über einen passiven Chip 74, der hier als ein passiver Radio-Frequency-Identification-Chip (RFID-Chip) ausgebildet ist, eine Spule 75, die elektrisch leitend an den Chip 74 angeschlossen ist, und einen Träger 76 aus nichtleitendem Material, zum Beispiel Kunststoff, der als Trägerfolie oder Trägerkörper ausgebildet sein kann (Fig. 3). Der den Datenträger 20 bildende passive RFID-Chip arbeitet in einem Frequenzbereich zwischen 800 MHz und 1.000 MHZ. Der RFID-Chip erzeugt ein magnetisches Feld, das über die Antenne 17 induktiv gekoppelt wird.

Die Antenne 17 verfügt über einen Schlitz 18 innerhalb des elektrisch leitfähigen Kennzeichenkörpers 11, nämlich im Aluminiumblech zur Bildung des Kennzeichenkörpers 11. Die Antenne 17 wird somit gebildet vom Kennzeichenkörper 11 mit dem Schlitz 18.

Der Schlitz 18 verläuft im Ausführungsbeispiel der Fig. 1 von einem oberen Rand 16 des Kennzeichenkörpers 11 aus etwa senkrecht zu diesem oberen Rand 16 in den Kennzeichenkörper 11 hinein. Dadurch ist der Schlitz 18 an einer Seite offen. Der Schlitz 18 kann aber auch von jedem anderen Rand des Kennzeichenkörpers 11 ausgehen. An dem der offenen Seite gegenüberliegenden Ende des Schlitzes 18 ist innerhalb des Kennzeichenkörpers 11 ein Durchbruch 19 angeordnet. Dieser Durchbruch 19 erweitert das im Kennzeichenkörper 11 liegende, geschlossene Ende des Schlitzes 18. Der Durchbruch 19 korrespondiert dabei mit der Gestalt bzw. Grundfläche des Datenträgers 20, sodass der Datenträger 20 in den Durchbruch 19 einsetzbar ist, nämlich von der Begrenzungsfläche 21 des Durchbruchs 19 umgeben ist, vorzugsweise ein umlaufender Spalt zwischen dem Durchbruch 19 und dem Datenträger 20 verbleibt. Der Datenträger 20 ist von seinem nichtleitenden Träger 76 vom Kennzeichenkörper 11 elektrisch isoliert. Auf diese Weise kommt es zur induktiven Ankopplung des Datenträgers 20 an die Antenne 17.

Die in vorstehend beschriebener Weise gebildete Antenne 17 dient beim Kennzeichen 10 gleichzeitig als Verstärker für die Signale des Chips 74, wodurch die relevanten Daten des Chips 74 mit relativ großem Abstand vom Kennzeichen 10 ausgelesen werden können.

Das Kennzeichen 10 weist auf der mit der Beschriftung 23 versehenen Vorderseite 14 eine als selbstklebende und vorzugsweise reflektierende Folie 24 ausgeführte Beschichtung auf. Die Folie 24 überdeckt die gesamte Vorderseite 14 des Kennzeichens 10. Damit sind auch der Schlitz 18 mit dem Durchbruch 19 und der Datenträger 20 vollständig von der Folie 24 überdeckt. Im Falle einer reflektierenden Folie 24 mit metallisch leitenden Bestandteilen ist es vorgesehen, dass die reflektierende Folie 24 dort, wo sich der Datenträger 20, der Durchbruch 19 und der Schlitz 18 befinden, mit einem demetallisierten Bereich 83 versehen ist oder im Schichtenaufbau so verändert wurde, dass im Bereich des Datenträgers 20, des Durchbruchs 19 und des Schlitzes 18 die reflektierende Folie 24 nicht leitend ist. Somit ist die reflektierende Folie 24 im gesamten Bereich des Schlitzes 18 einschließlich des Durchbruchs 19 vollständig nicht leitend. Bevorzugt ist die reflektierende Folie 24 auch in an den Schlitz 18 und den Durchbruch 19 bzw. den Datenträger 20 angrenzenden Randbereichen durchgehend elektrisch nicht leitend ausgebildet, insbesondere demetallisiert.

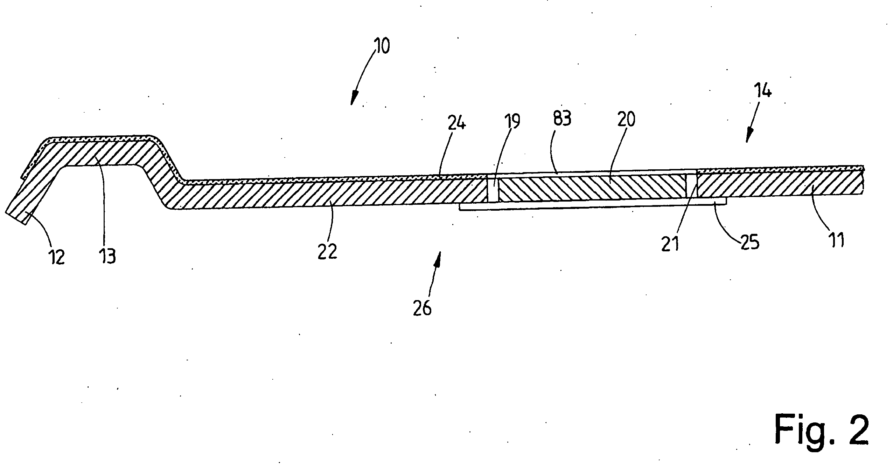

Auf einer Rückseite 26 des Kennzeichenkörpers 11 ist ein nicht leitender Aufkleber 25 angeordnet. Im gezeigten Ausführungsbeispiel (Fig. 2) überdeckt dieser Aufkleber 25 mindestens den Bereich des Schlitzes 18 mit dem Durchbruch 19 und den darin angeordneten Datenträger 20. Der Aufkleber 25 kann jedoch auch einen größeren Bereich überdecken, oder als eine die gesamte Rückseite 26 des Kennzeichens 10 überdeckende selbstklebende Folie ausgebildet sein.

Der Datenträger 20, insbesondere der Träger 76, ist etwa so hoch, wie der Kennzeichenkörper 11 dick ist. Hierdurch ist es möglich, den Datenträger 20 zwischen der auf der Vorderseite 14 aufgebrachten Folie 24 und dem auf der Rückseite 26 aufgebrachten Aufkleber 25 innerhalb des Durchbruchs 19 flächenbündig unterzubringen und zu fixieren (Fig. 2).

Der in der Fig. 3 gezeigte Träger 76 weist eine runde Grundfläche auf, und zwar ebenso wie der Durchbruch 19. Der Träger 76 und der dazu korrespondierende Durchbruch 19 können aber auch Grundflächen mit beliebigen anderen geometrischen Gestaltungen aufweisen. Die Fläche des Durchbruchs 19 stimmt geometrisch mit der Grundfläche des Datenträgers 20, nämlich seines Trägers 76, überein. Der Durchbruch 19 ist im gezeigten Ausführungsbeispiel größer als der Träger 76, wodurch der Träger 76 von einem umlaufenden Spalt umgeben ist.

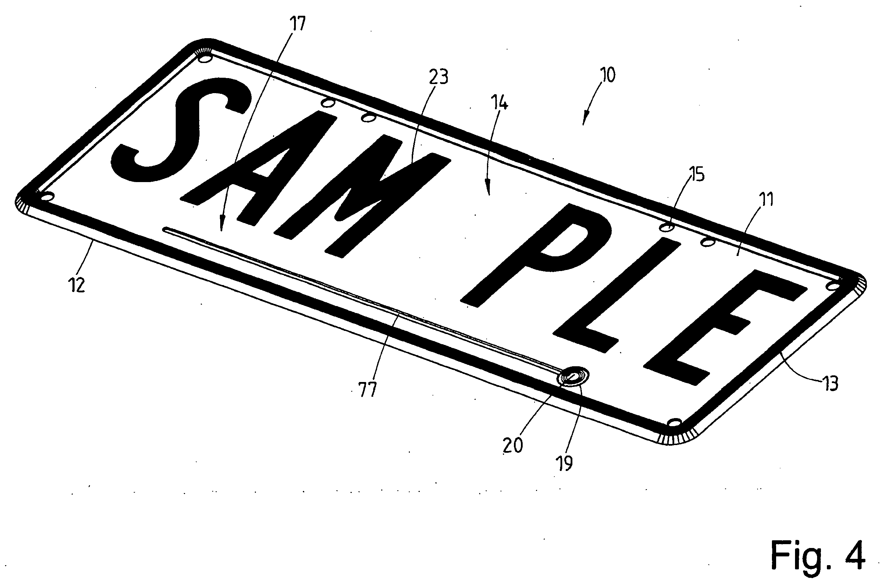

Die Fig. 4 zeigt ein Kennzeichen 10, das sich von demjenigen der Fig. 1 und 2 nur durch einen geänderten Schlitz 77 unterscheidet. Dieser Schlitz 77 hat beidseitig geschlossene Enden. Der Schlitz 77 erstreckt sich mit geringem Abstand parallel zum unteren Längsrand des Kennzeichenkörpers 11, und zwar im Bereich des Beschriftungsfelds 22. Im gezeigten Ausführungsbeispiel liegt der geradlinige Schlitz 77 zwischen der Beschriftung 23 und der Falz 13 am unteren Längsrand des Kennzeichens 10.

Einem Ende eines Schlitzes 77 ist der Durchbruch 19 zugeordnet, der korrespondierend zur Grundfläche des Datenträgers 20, nämlich eines Trägers 76, ausgebildet ist. Der Durchbruch 20 ist wie beim Ausführungsbeispiel der Fig. 1 und 2 ausgebildet. Der Datenträger 20 entspricht dem in der Fig. 3 gezeigten Datenträger 20.

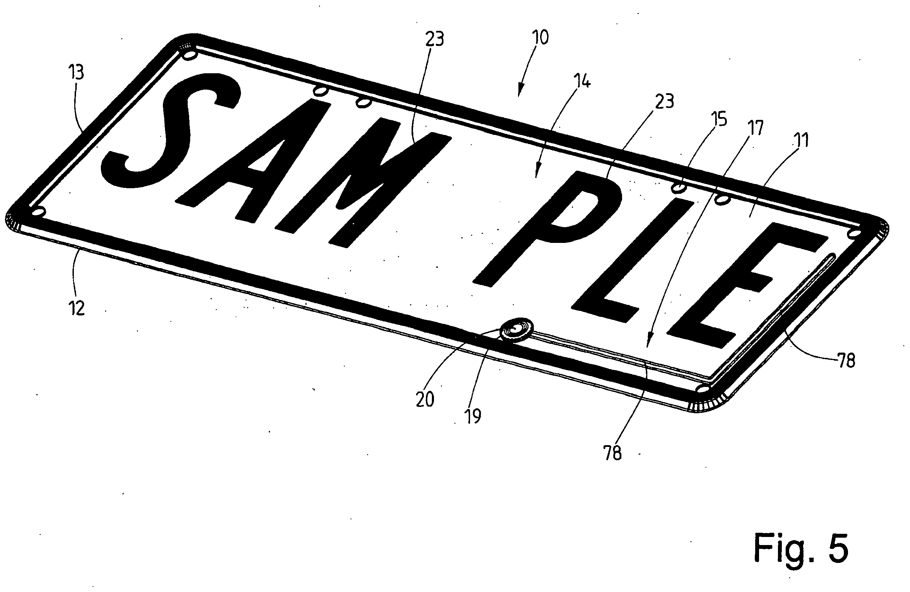

Das Kennzeichen 10 der Fig. 5 unterscheidet sich von dem Kennzeichen 10 der zuvor beschriebenen Ausführungsbeispiele nur dadurch, dass der Schlitz 78 einen anderen Verlauf aufweist. Dieser Schlitz 78 ist auch an beiden Enden geschlossen, aber rechtwinklig abgeknickt, und zwar vorzugsweise mittig. Dadurch erstreckt sich eine Hälfte des Schlitzes 78 im Bereich eines Längsrands, während der andere Teil des Schlitzes 78 parallel zum kürzeren Querrand des Kennzeichens 10 verläuft. Einem geschlossenen Ende des Schlitzes 78 ist wieder ein Durchbruch 19 zugeordnet, der korrespondierend zum Datenträger 20 ausgebildet ist. Beim gezeigten Ausführungsbeispiel befindet sich der Durchbruch 19 mit dem Datenträger 20 an demjenigen Ende des abgewinkelten Schlitzes 78, das dem Längsrand des Kennzeichenkörpers 11 zugeordnet ist. Der Durchbruch 19 mit dem Datenträger 20 kann sich aber auch an demjenigen Ende des Schlitzes 78 befinden, der dem kürzeren Querrand des Kennzeichenkörpers 11 zugeordnet ist. Der Durchbruch 19 entspricht demjenigen des Ausführungsbeispiels der Fig. 1. Der Datenträger 20 ist auch so ausgebildet, wie in der Fig. 3 dargestellt. Auf die Beschreibung der Fig. 1 bis 3 wird Bezug genommen.

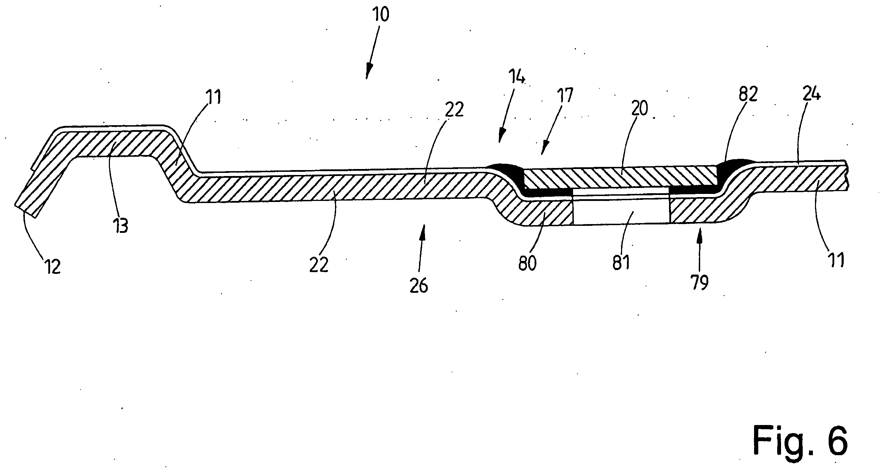

Das Kennzeichen 10 der Fig. 6 unterscheidet sich vom zuvor beschriebenen Kennzeichen dadurch, dass der Datenträger 20, der grundsätzlich so ausgebildet ist, wie in der Fig. 3 dargestellt und beschrieben, in einer Aufnahmemulde 79 angeordnet ist. Die Aufnahmemulde 79 ist wie die Falz 13 in den aus Blech gebildeten Kennzeichenkörper 11 eingeprägt, und zwar von der Vorderseite 14 des Kennzeichenkörpers 11 her, wodurch die Aufnahmemulde 79 an der Vorderseite 14 des Kennzeichens 10 offen ist. Dadurch ist der Datenträger 20 von der Vorderseite 14 her in die Aufnahmemulde 79 einsetzbar. Die Tiefe der Aufnahmemulde 79 ist so gewählt, dass die zur Vorderseite 14 des Kennzeichens 10 weisende Oberseite des Datenträgers 20 etwa bündig mit der Vorderseite 14 des Kennzeichens 10 abschließt.

Die Aufnahmemulde 79 ist einem Ende des Schlitzes im Kennzeichenkörper 11 zugeordnet. Dieses Ende des Schlitzes braucht keinen Durchbruch 19 aufzuweisen; denn der Durchbruch 19 wird bei diesem Ausführungsbeispiel durch die Aufnahmemulde 79 ersetzt. Die Aufnahmemulde 79 kann sich an einem Ende des Schlitzes 18, 77 oder 78 befinden. Die Aufnahmemulde 79 ist am Ende des jeweiligen Schlitzes 18, 77 oder 78 in den Kennzeichenkörper 11 eingeprägt, wodurch eine Bodenwandung 80 der Aufnahmemulde 79 eine vom Ende des jeweiligen Schlitzes 18, 77 oder 78 gebildete durchgehende Öffnung 81 aufweist. Diese Öffnung 81 ist mindestens in der Breite kleiner als die Außenabmessungen des Trägers 76 des Datenträgers 20, wodurch der Datenträger 20 nicht durch die durchgehende Öffnung 81 in der Bodenwandung 80 der Aufnahmemulde 79 hindurchpasst.

Im gezeigten Ausführungsbeispiel ist die Aufnahmemulde 79 in den Kennzeichenkörper 11 eingeprägt, nachdem seine Vorderseite 14 bereits mit der Folie 24 versehen ist. Die Folie 24, bei der es sich um eine Reflexfolie handeln kann, erstreckt sich dadurch über die Bodenwandung 80 der Aufnahmemulde 79 hinweg. In diesem Falle ist der Datenträger 20 in der oben offenen Aufnahmemulde 79 durch eine nicht leitende Masse, beispielsweise einen Kleber 82, befestigt. Der Kleber 82 füllt im gezeigten Ausführungsbeispiel auch einen den Datenträger 20 ringsherum umgebenden Zwischenraum zwischen den Außenwandungen des Trägers 76 und der demgegenüber größeren Aufnahmemulde 79 aus, so dass durch den Datenträger 20 und den Kleber 82 die Aufnahmemulde 79 völlig ausgefüllt ist (Fig. 6). Beim hier gezeigten Ausführungsbeispiel braucht die Folie 24 im Bereich der Aufnahmemulde 79 und des Datenträgers 20 nicht demetallisiert zu sein. Auf die Aufnahmemulde 79 kann von der Vorderseite 14 des Kennzeichens 10 ein Label aufgeklebt sein.

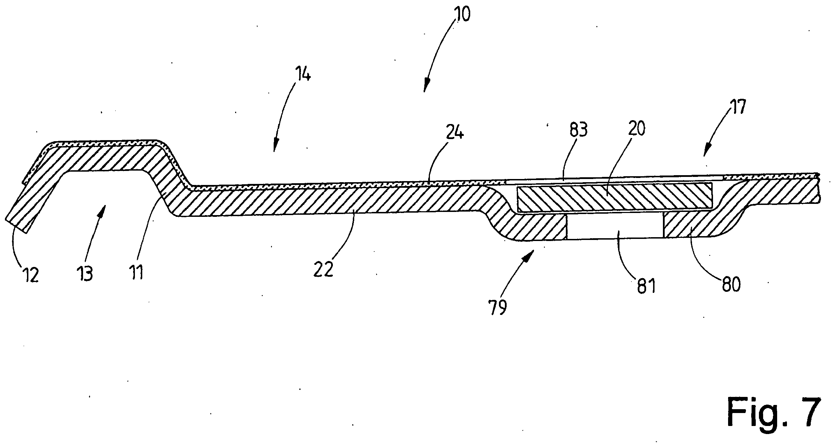

Die Fig. 7 zeigt ein weiteres Ausführungsbeispiel des Kennzeichens 10, was wie das Kennzeichen der Fig. 6 eine Aufnahmemulde 79 aufweist. Die Aufnahmemulde 79 ist genauso ausgebildet wie beim Kennzeichen 10 der Fig. 6, weswegen sie mit gleichen Bezugsziffern versehen ist. Insbesondere weist die Bodenwandung 80 der Aufnahmemulde 79 auch hier eine Öffnung 81 auf, die von einem Ende eines Schlitzes 18, 77 oder 78 gebildet ist.

Abweichend vom Ausführungsbeispiel der Fig. 6 ist beim Ausführungsbeispiel der Fig. 7 die Aufnahmemulde 79 im Kennzeichenkörper 11 eingeprägt, bevor die Folie 24 auf die Vorderseite 14 des Kennzeichenkörpers 11 aufgeklebt worden ist. Dadurch ist die Innenseite der Aufnahmemulde 79 nicht mit der Folie 24 beschichtet. Der Datenträger 20 ist vielmehr in die unbeschichtete Aufnahmemulde 79 eingesetzt. Dabei kommt eine elektrisch nichtleitende Isolierung zwischen dem leitenden Blech des Kennzeichenkörpers 11 und dem Datenträger 20 zustande durch den aus nicht leitendem Material gebildeten Träger 76. Der Datenträger 20 ist auch nicht in der Aufnahmemulde 79 festgeklebt. Vielmehr liegt der Datenträger 20 mit der Unterseite auf dem die Öffnung 81 teilweise umgebenden Teil der Bodenwandung 80 auf, während der Datenträger 20 auf der Oberseite gehalten ist durch die Folie 24, die sich beim in der Fig. 7 gezeigten Kennzeichen 10 über die Aufnahmemulde 79 hinweg erstreckt, und zwar ebenflächig. Im gezeigten Ausführungsbeispiel handelt es sich bei der Folie 24 um eine Reflexfolie mit leitenden Eigenschaften. Deswegen ist die Reflexfolie 24 im Bereich des Datenträgers 20 bzw. der Aufnahmemulde 79 elektrisch nichtleitend durch einen demetallisierten Bereich 83. Dadurch kann der in der Aufnahmemulde 79 angeordnete Datenträger 20 verstärkte Signale absenden, die mit verhältnismäßig großem Abstand vom Kennzeichen 10 von einem Lesegerät oder dergleichen empfangen werden können.

Die Schlitze 18, 77 bzw. 78 weisen eine Breite auf, die der 1,5-fachen bis 2-fachen Dicke des Blechs zur Bildung des Kennzeichenkörpers 11 entspricht. Je nach Blechdicke kann deshalb der Schlitz eine Breite zwischen 1,5 mm und 2,5 mm, vorzugsweise etwa 2 mm, aufweisen. Die Länge des Schlitzes beträgt zwischen 100 mm und 200 mm, vorzugsweise etwa 160 mm. Der Durchmesser des Datenträgers 20 liegt im Bereich zwischen 6 mm und 10 mm, vorzugsweise beträgt er etwa 8 mm. Die Dicke des Datenträgers 20, insbesondere des Trägers 76, kann beim Kennzeichen 10 etwa der Blechdicke des Kennzeichenkörpers 11 entsprechen.

## Patentansprüche

1. Kennzeichen für ein Fahrzeug mit einem flächigen, zumindest teilweise elektrisch leitenden Kennzeichenkörper (11), der wenigstens ein Beschriftungsfeld (22) aufweist, und mit mindestens einer Beschriftung (23), die dem Beschriftungsfeld (22) des Kennzeichenkörpers (11) zugeordnet ist, wobei dem Kennzeichenkörper (11) ein berührungslos auslesbarer Datenträger (20) und eine durch zumindest einen Schlitz (18, 77, 78) im Kennzeichenkörper (11) gebildete Antenne (17) zugeordnet sind und der Datenträger (20) ein ein magnetisches Feld erzeugender Datenträger (20) ist, wobei der Datenträger (20) induktiv an den Schlitz (18, 77, 78) angekoppelt ist, und wobei der Datenträger (20) einen passiven RFID-Chip (74), mindestens eine damit elektrisch leitend verbundene Spule (75) und einen Träger (76) aus einem isolierenden bzw. nichtleitenden Material aufweist und der Schlitz (18, 77, 78) bzw. der Datenträger (20) gleichzeitig als Verstärker dienen, **dadurch gekennzeichnet, dass** der Träger (76) des Datenträgers (20) als Trägerkörper ausgebildet ist und der Schlitz (18, 77, 78) zur Aufnahme des Trägers (76) mindestens einen Durchbruch (19) aufweist, wobei durch den Durchbruch (19) ein Ende des Schlitzes (18, 77, 78) aufgeweitet ist.

2. Kennzeichen nach Anspruch 1, **dadurch gekennzeichnet, dass** der Datenträger (20) elektrisch isoliert dem Schlitz (18, 77, 78) zugeordnet ist, insbesondere im Bereich eines Endes des Schlitzes (18, 77, 78).

3. Kennzeichen nach Anspruch 1 oder 2, **dadurch gekennzeichnet, dass** der Datenträger (20) isoliert innerhalb des Schlitzes (18, 77, 78) oder über dem Schlitz (18, 77, 78) angeordnet ist, vorzugsweise elektrisch leitende Bestandteile des Datenträgers (20) von den Begreniungsflächen (21) des Schlitzes (18, 77, 78) beabstandet sind.

4. Kennzeichen nach einem der vorhergehenden Ansprüche, **dadurch gekennzeichnet, dass** der Durchbruch (19) den Schlitz (18, 77, 78) im Bereich seines geschlossenen Endes vergrößert.

5. Kennzeichen nach einem oder mehreren der vorhergehenden Ansprüche, **dadurch gekennzeichnet, dass** der Datenträger (20) im Kennzeichenkörper (11) eingebettet ist, insbesondere im Schlitz (18, 77, 78) bzw. im Durchbruch (19) fixiert ist, vorzugsweise von mindestens einer Beschichtung (24) auf dem Kennzeichenkörper (11).

6. Kennzeichen nach Anspruch 5, **dadurch gekennzeichnet, dass** zumindest eine sichtbare Beschichtung (24) als eine insbesondere selbstklebende Reflexfolie ausgebildet ist, die vorzugsweise im Bereich des Datenträgers (20) bzw. des Durchbruchs (19) und/ oder des Schlitzes (18, 77, 78) so ausgebildet ist, dass sie keine leitenden Bestandteile aufweist.

## Claims

1. An identification device for a vehicle with a flat, at least partially electrically inductive identification device body (11), which has at least one indicia area (22) and with at least one indicia (23), which is assigned to the indicia area (22) of the identification device body (11), wherein the identification device body (11) is assigned a data carrier (20) which is contactlessly readable, and an antenna (17) formed by at least one slit (18, 77, 78) in the identification device body (11), and the data carrier (20) is a data carrier (20) which generates a magnetic field, wherein the data carrier (20) is inductively coupled to the slit (18, 77, 78), and wherein the data carrier (20) has a passive RFID chip (74), at least one coil (75) connected electroconductively thereto, and a carrier (76) made of an insulating or non-conducting material and the slit (18, 77, 78) or the data carrier (20) serve simultaneously as an amplifier, **characterized in that** the carrier (76) of the data carrier (20) is configured as a carrier body and the slit (18, 77, 78) has at least one opening (19) for accommodating the carrier (76), wherein one end of the slit (18, 77, 78) is enlarged by the opening (19).

2. The identification device according to Claim 1, **characterized in that** the data carrier (20) is assigned to the slit (18, 77, 78) in an electrically insulated manner, in particular in the region of an end of the slit (18, 77, 78).

3. The identification device according to Claim 1 or 2, **characterized in that** the data carrier (20) is arranged in an insulated manner within the slit (18, 77, 78) or above the slit (18, 77, 78), preferably with electrically conductive components of the data carrier (20) being spaced from the periphery surfaces (21) of the slit (18, 77, 78).

4. The identification device according to one of the previous Claims, **characterized in that** the opening (19) enlarges the slit (18, 77, 78) in the region of its closed end.

5. The identification device according to one or more of the previous Claims, **characterized in that** the data carrier (20) is embedded in the identification device body (11), in particular is fixed in the slit (18, 77, 78) or in the opening (19), preferably by at least one coating (24) on the identification device body (11).

6. The identification device according to Claim 5, **characterized in that** at least one visible coating (24) is configured as an in particular self-adhesive reflective film, which preferably is configured in the region of the data carrier (20) or of the opening (19) and/or of the slit (18, 77, 78) in such a manner that it has no conductive components.

## Revendications

1. Plaque minéralogique destinée à un véhicule comportant un corps de plaque minéralogique (11) au moins partiellement électriquement conducteur plan qui présente au moins une zone d'inscription (22) et comportant au moins une inscription (23) qui est associée à la zone d'inscription (22) du corps de plaque minéralogique (11), dans laquelle un support de données (20) lisible sans contact et une antenne (17) formée à travers au moins une fente (18, 77, 78) dans le corps de plaque minéralogique (11) sont associés au corps de plaque minéralogique (11) et le support de données (20) est un support de données (20) générant un champ magnétique, dans laquelle le support de données (20) est couplé par induction à la fente (18, 77, 78), et dans laquelle le support de données (20) comporte une puce RFID passive (74), au moins une bobine (75) reliée de manière électriquement conductrice à celle-ci et un support (76) constitué d'un matériau isolant ou non conducteur et la fente (18, 77, 78) ou le support de données (20) jouent simultanément le rôle d'amplificateur, **caractérisée en ce que** le support (76) du support de données (20) est réalisé sous la forme d'un corps de support et **en ce que** la fente (18, 77, 78) destinée à recevoir le support (76) présente au moins une perforation (19), dans laquelle une extrémité de la fente (18, 77, 78) est élargie par la perforation (19).

2. Plaque minéralogique selon la revendication 1, **caractérisée en ce que** le support de données (20) est associé de manière électriquement isolée à la fente (18, 77, 78), notamment dans la région d'une extrémité de la fente (18, 77, 78).

3. Plaque minéralogique selon la revendication 1 ou 2, **caractérisée en ce que** le support de données (20) est disposé de manière isolée à l'intérieur de la fente (18, 77, 78) ou au-dessus de la fente (18, 77, 78), et **en ce que** des parties constitutives de préférence électriquement conductrices du support de données (20) sont espacées des surfaces de délimitation (21) de la fente (18, 77, 78).

4. Plaque minéralogique selon l'une quelconque des revendications précédentes, **caractérisée en ce que** la perforation (19) agrandit la fente (18, 77, 78) dans la région de son extrémité fermée.

5. Plaque minéralogique selon l'une ou plusieurs des revendication précédentes, **caractérisée en ce que** le support de données (20) est incorporé dans le corps de plaque minéralogique (11), et **en ce qu'**il est notamment fixé dans la fente (18, 77, 78) ou dans la perforation (19), de préférence par au moins un revêtement (24) sur le corps de plaque minéralogique (11).

6. Plaque minéralogique selon la revendication 5, **caractérisée en ce qu'**au moins un revêtement visible (24) est réalisé notamment sous la forme d'un film réfléchissant autocollant qui est de préférence formé dans la région du support de données (20) ou de la perforation (19) et/ou de la fente (18, 77, 78) de manière à ne comporter aucune partie constitutive conductrice.
